# EUROPÄISCHE PATENTSCHRIFT

(11) **EP 3 013 744 B1**
(45) Veröffentlichungstag und Bekanntmachung des Hinweises auf die Patenterteilung: **20.09.2017**
(21) Anmeldenummer: 14730539.5
(22) Anmeldetag: 17.06.2014
(51) Int. Cl.: C01B 33/107, C01B 33/027

(54) **VERFAHREN ZUM BETREIBEN EINES WIRBELSCHICHTREAKTORS**
METHOD FOR OPERATING A FLUIDIZED BED REACTOR
PROCÉDÉ POUR FAIRE FONCTIONNER UN RÉACTEUR À LIT FLUIDISÉ

(30) Priorität: 27.06.2013 DE 102013212406
(43) Veröffentlichungstag der Anmeldung: 04.05.2016
(73) Patentinhaber: Wacker Chemie AG, 81737 München (DE)
(72) Erfinder: WECKESSER, Dirk, 84561 Mehring (DE)
(74) Vertreter: Potten, Holger
(86) Internationale Anmeldenummer: PCT/EP2014/062661
(87) Internationale Veröffentlichungsnummer: WO 2014/206805

(56) Entgegenhaltungen:
- EP-A1- 1 886 971
- EP-A2- 0 219 142
- WO-A1-2007/145474
- US-A- 4 416 913

## Beschreibung

Die Erfindung betrifft ein Verfahren zum Betreiben eines Wirbelschichtreaktors.

Wirbelschichtreaktoren werden beispielsweise zur Herstellung von Trichlorsilan (TCS) durch die Reaktion von metallurgischem Silicium mit HCl bei 350-400 °C verwendet. Ebenso kann TCS im Wirbelschichtreaktor aus metallurgischem Silicium mit STC/H₂(STC = Siliciumtetrachlorid) erzeugt werden.

Wirbelschichtreaktoren werden auch zur Herstellung von polykristallinem Siliciumgranulat verwendet. Dies geschieht durch Fluidisierung von Siliciumpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases erfolgt eine Pyrolysereaktion an der heißen Partikeloberfläche. Dabei scheidet sich elementares Silicium auf den Siliciumpartikeln ab und die einzelnen Partikel wachsen im Durchmesser an. Durch den regelmäßigen Abzug von angewachsenen Partikeln und Zugabe kleinerer Siliciumpartikel als Keimpartikel (im weiteren Verlauf des Dokuments "Seed" genannt) kann das Verfahren kontinuierlich mit allen damit verbundenen Vorteilen betrieben werden. Als siliciumhaltiges Eduktgas sind Silicium-Halogenverbindungen (z. B. Chlorsilane oder Bromsilane), Monosilan (SiH₄), sowie Mischungen dieser Gase mit Wasserstoff beschrieben. Derartige Abscheideverfahren und Vorrichtungen hierzu sind beispielsweise aus US 4786477 A bekannt.

Bei der Demontage und Wiedermontage eines Wirbelschichtreaktors gelangt durch die Umgebungsatmosphäre Sauerstoff und Luftfeuchtigkeit in den Reaktorinnenraum und die notwendigerweise geöffneten Rohrleitungen.

Aus US 8017024 B2 ist ein Verfahren zur Herstellung von polykristallinem Siliciumgranulat in einem Wirbelschichtreaktor bekannt. Nach Beendigung der Abscheidung wird das Reaktorinnere gekühlt, während es mit einem Inertgas wie H₂, N₂, Ar, He oder einem Gemisch der genannten Gase gespült wird. Anschließend werden die abgekühlten Siliciumpartikel entnommen, der Reaktor demontiert, das Reaktorrohr durch ein neues ersetzt, der Reaktor wieder montiert und Siliciumpartikel in das Reaktorrohr eingefüllt. Anschließend werden die Siliciumpartikel aufgeheizt und ein neuer Abscheidevorgang beginnt.

US4416913A beschreibt ein Verfahren zur Herstellung von Silicium in einem Reaktor. Bevor dem Reaktor ein Chlorsilane enthaltendes Gemisch zugeführt wird, erfolgt eine Spülung des Reaktors mit einem Inertgas und mit Wasserstoff.

Auch in US6827786 B2 ist ein Wirbelschichtreaktor beschrieben. Es ist vorgesehen, Energie rückzugewinnen, indem das Granulat mit Gasen, die geringe Verunreinigungen an Kohlenstoff und Sauerstoff aufweisen, in Kontakt gebracht wird.

Aus der beschriebenen Problematik ergab sich die Aufgabenstellung der Erfindung.

Die Aufgabe wird gelöst durch ein Verfahren zum Betreiben eines Wirbelschichtreaktors in einem Prozess zur Herstellung von Trichlorsilan aus Silicium und HCl oder aus Silicium und H2/Tetrachlorsilan oder in einem Prozess zur Herstellung von Silicium aus Trichlorsilan, umfassend eine Spülung a des Reaktors und der Zugasleitungen bei Raumtemperatur mit einem Inertgas für 0,5 bis 10 Stunden mit einer Gasmenge von 10 bis 500 Nm³/h; eine Spülung b des Reaktors und der Zugasleitungen mit H2, wobei während des Spülens mit H2 auf eine Temperatur von 100-1000 °C aufgeheizt wird, wobei die Spülung für 2 bis 100 Stunden betrieben wird mit einer Gasmenge von 200 bis 1000 Nm³/h; eine Spülung c des Reaktors und der Zugasleitungen mit Trichlorsilan oder mit einem Gemisch enthaltend Trichlorsilan für 2 bis 50 Stunden mit einer Spülgasmenge, so dass eine Konzentration des Trichlorsilans oder des Trichlorsilangemisches bezogen auf eine gesamte durch eine Wirbelschicht geförderte Gasmenge 10 mol% bis 50 mol% beträgt und eine Konzentration des Trichlorsilans oder des Trichlorsilangemisches bezogen auf eine gesamte durch eine Reaktionsgasdüse geförderte Gasmenge 20 mol% bis 50 mol% beträgt.

Vorzugsweise wird nach Spülvorgängen in der Reihenfolge a-b-c, d.h. zunächst Spülung mit einem Inertgas, nachfolgend Spülung mit H2, dann Spülung mit Trichlorsilan oder einem Trichlorsilan enthaltenden Gemisch, polykristallines Silicium auf Keimpartikeln abgeschieden, wobei ein Reaktionsgas Trichlorsilan umfasst.

Vorzugsweise wird das erfindungsgemäße hochreine polykristalline Siliciumgranulat durch Abscheiden eines Reaktionsgases auf Keimkristallen aus Silicium in einem Fließbett hergestellt.

Das Reaktionsgas besteht bevorzugt aus einer Mischung von Wasserstoff und Trichlorsilan.

Die Abscheidung erfolgt vorzugsweise bei einer Temperatur der Wirbelschicht im Reaktionsbereich von 700°C bis 1200 °C.

Die vorgelegten Keimkristalle in der Wirbelschicht werden vorzugsweise mit Hilfe eines siliciumfreien Fluidisiergases, vorzugsweise Wasserstoff, fluidisiert und mittels Temperaturstrahlung erhitzt.

Die Wärmeenergie wird bevorzugt mittels flächiger Heizstrahler gleichmäßig über den Umfang des Fließbettes eingetragen.

In der Reaktionszone wird das siliciumhaltige Reaktionsgas aufgrund einer CVD-Reaktion als elementares Silicium auf den Siliciumteilchen abgelagert.

Nicht abreagiertes Reaktionsgas, Fluidisierungsgas und gasförmige Nebenreaktionsprodukte werden aus dem Reaktor entfernt.

Durch regelmäßiges Abziehen von mit dem abgelagerten Silicium versehenen Partikeln aus dem Fließbett und Zugabe von Keimkristallen kann das Verfahren kontinuierlich betrieben werden.

Die Temperatur der Wirbelschicht im Reaktionsbereich beträgt besonders bevorzugt von 850°C bis 1100°C, ganz besonders bevorzugt von 900°C bis 1050 °C.

Das Reaktionsgas wird vorzugsweise über eine oder mehrere Düsen in die Wirbelschicht eingedüst.

Der absolute Druck im Fließbett liegt vorzugsweise zwischen 0,1 MPa und 1,1 MPa, besonders bevorzugt zwischen 0,15 MPa und 0,7 MPa, ganz besonders bevorzugt zwischen 0,2 MPa und 0,5 MPa.

Die Konzentration des siliciumhaltigen Reaktionsgases beträgt bezogen auf die gesamte durch die Wirbelschicht geförderte Gasmenge vorzugsweise 15 mol% bis 40 mol%.

Die gemittelte Verweilzeit des Reaktionsgases in der Wirbelschicht beträgt vorzugsweise 100 ms bis 10 s, bevorzugt 150 ms bis 5 s, besonders bevorzugt 200 ms bis 2 s.

Die Wirbelschicht wird vorzugsweise als blasenbildende Wirbelschicht betrieben. Eine stoßende Betriebsweise (engl. slugging mode), bei der es zum Anwachsen von Blasen in der Wirbelschicht bis auf den Durchmesser der Wirbelschicht kommt, die dann verdichtetes Wirbelschichtmaterial als Feststoffkolben nach oben schieben bis die Blasen kollabieren, wird vorzugsweise durch Maßnahmen wie z.B. die Wahl eines möglichst kleinen Verhältnisses von Betthöhe zu Bettdurchmesser (flaches Bett) oder durch die Anordnung von mechanischen Blasenbrechern in der Wirbelschicht vermieden.

Vorzugsweise wird nach einer Abscheidung von polykristallinem Silicium auf Keimpartikeln, bei der ein Reaktionsgas Trichlorsilan umfasst, eine Zufuhr von Reaktionsgas enthaltend Trichlorsilan beendet, wobei anschließend eine Spülung b des Reaktors und der Zugasleitungen mit H2 erfolgt, wobei während des Spülens mit H2 auf eine Temperatur von 100-1000 °C aufgeheizt wird, wobei die Spülung für 1 bis 20 Stunden betrieben wird mit einer Gasmenge von 50 bis 800 Nm³/h und anschließend eine Spülung a des Reaktors und der Zugasleitungen bei Raumtemperatur mit einem Inertgas für 1 bis 20 Stunden mit einer Gasmenge von 10 bis 500 Nm³/h folgen, wobei daran anschließend der Reaktor geöffnet und demontiert wird.

Vorzugsweise erfolgt zwischen Demontage und Wiedermontage des Reaktors eine weitere Spülung des Reaktors und der Zugasleitungen mit einem Inertgas.

Vorzugsweise werden eine oder mehrere der Spülungen a, b und c durch Druckwechselspülung verstärkt.

Vorzugsweise handelt es sich beim Inertgas um Stickstoff oder um ein Edelgas wie z.B. Helium oder Argon.

Die Erfindung sieht vor, den Reaktor zu inertisieren, bevor er mit einem Halogensilan / Wasserstoff-gemisch eingefahren wird. Dies dient einerseits dazu, eine Knallgasexplosion zu vermeiden, andererseits wird eine Kontamination des Produkts polykristallines Siliciumgranulat mit Feuchtigkeit bzw. den von der Feuchtigkeit hervorgerufenen Verunreinigungen (z. B. Phosphor aus Stahl) vermieden. Es hat sich gezeigt, dass die erfindungsgemäßen Spülvorgänge deutlich effektiver sind als die aus dem Stand der Technik bekannte Vorgehensweise.

Auch beim Ausfahren des Reaktors ist es vorteilhaft, die Phase, in der ein Halogensilan/Wasserstoff-Gemisch zugeführt wird, von der Erstöffnung durch Inertisierung zu trennen, da sonst Reaktionsgas in die Umgebung gelangen kann.

Die Spülung mit Inertgas und anschließend Wasserstoff (beim Einfahren) bzw. Wasserstoff und anschließend Inertgas (beim Ausfahren) dient also der Trennung von Umgebungsbedingungen zu Reaktionsbedingungen vor und nach der Abscheidung.

Beim Halogensilan handelt es sich um Trichlorsilan.

Die Inertisierung erfolgt durch einen zwischen die entsprechenden Phasen gesetzten Spülvorgang mit einem Inertgas für eine definierte Zeit mit einem definierten Volumenstrom.

Beim Einfahren wird erst mit dem Inertgas gespült und dann der Reaktor mit einem Trichlorsilan/Wasserstoff-Gemisch beaufschlagt.

Beim Ausfahren wird nach dem Schließen der Trichlorsilan-Wasserstoff-Zufuhr zunächst mit einem Inertgas gespült und anschließend der Reaktor geöffnet.

Besondere Vorteile der Erfindung bestehen darin, dass
- mit gezielten Fahrkurven ein inerter Zustand hergestellt wird;
- verhindert wird, dass ein explosionsfähiges Gemisch entsteht;
- Produktkontamination durch Feuchtigkeitseintrag reduziert wird.

Ein besonderer Vorteil besteht darin, dass durch Spülprozesse mit Inertgas zusätzlich die mit den Keimpartikeln eingetragene Kontamination durch Feuchtigkeit reduziert wird.

Bei den Spülvorgängen ist das Volumen der Rohrleitungen und des Reaktors entscheidend sowohl für die Spülzeiten als auch für die Spülgasmengen. Zusätzlich beeinflusst der gewünschte Grad der Produktqualität des im späteren Abscheideprozess hergestellten Siliciumgranulats die Spülzeit und die Spülgasmengen. Bei hochreinen Produkten für die Halbleiterindustrie muss dementsprechend länger gespült werden, als für Solaranwendungen.

### Bevorzugtes Vorgehen beim Einfahren:

1. Spülvorgang a: Spülen des Reaktors und der Zugasleitungen mit einem Inertgas (N2, Ar, He) für einen definierten Zeitraum zum Entfernen von 02 und Feuchtigkeit.
   Der Spülvorgang a wird für einen Zeitraum von 0,5 bis 10 h betrieben. Die Gaserhitzer für Fluidisierungs- und für Reaktionsgas werden dabei bei Raumtemperatur gefahren. Es wird mit einer Spülgasmenge von 10 bis 500 Nm³/h gespült, wobei das Spülgas zu 100 % aus Inertgas, wie z. B. Stickstoff besteht.
2. Spülvorgang b: Spülen des Reaktors und der Zugasleitungen mit H2 für einen definierten Zeitraum zum Entfernen des Inertgases.
   Der Spülvorgang b wird für einen Zeitraum von 2 bis 100 h betrieben. Die Gaserhitzer werden dabei bei Temperaturen von 100 bis 1000 °C gefahren. Es wird mit einer Spülgasmenge von 200 bis 1000 Nm³/h gespült, wobei das Spülgas zu 100 % aus Wasserstoff besteht.
3. Spülvorgang c: Austauschen von H2 durch ein Chlorsilan oder eine Mischung aus Chlorsilanen in gegenläufigen Rampen, bei konstanter Leerrohrgasgeschwindigkeit.

Der Spülvorgang c wird für einen Zeitraum von 2 bis 50 h betrieben. Dabei werden die Spülgasmengen so eingestellt, dass folgende Kriterien erfüllt sind:

Die Konzentration des siliciumhaltigen Reaktionsgases beträgt bezogen auf die gesamte durch die Wirbelschicht geförderte Gasmenge 10 mol% bis 50 mol%, bevorzugt 15 mol% bis 40 mol%.

Die Konzentration des siliciumhaltigen Reaktionsgases in der Reaktionsgasdüse beträgt bezogen auf die gesamte durch die Reaktionsgasdüse geförderte Gasmenge von 20 mol% bis 50 mol%

Es wird folglich mit den gleichen Gasmengen gespült, die auch für die Abscheidung Verwendung finden. Das in diesem Zeitraum abgeschiedene Granulat wird zu Offgrade-Material abgewertet. Die Gaserhitzer werden dabei bei Temperaturen von 100 bis 1000 °C gefahren. Der Reaktorheizer ist eingeschaltet.

Die Spülung kann kontinuierlich sein oder auch durch Druckwechselspülung verstärkt werden.

### Bevorzugtes Vorgehen beim Ausfahren:

1. Schließen der Chlorsilanzufuhr;
2. Spülvorgang b: Spülen des Reaktors und der Zugasleitungen mit H2. Der Spülvorgang b wird für einen Zeitraum von 1 bis 20 h betrieben. Die Gaserhitzer werden dabei bei Temperaturen von 100 bis 1000 °C betrieben. Es wird mit einer Spülgasmenge von 50 bis 800 Nm³/h gespült.
3. Inertisieren des Reaktors und der Zugasleitungen mit einem Inertgas (N2, Ar, He). Der Spülvorgang a wird für einen Zeitraum von 1 bis 20 h betrieben. Die Gaserhitzer werden bei Raumtemperatur gefahren. Es wird mit einer Spülgasmenge von 10 bis 500 Nm³/h gespült.
4. Öffnen der Anlage und Demontage

Die Spülung kann auch durch Druckwechselspülung verstärkt werden.

Während des Chargenwechsels kann zusätzlich eine Ruhespülung mit einem Inertgas erfolgen.
Hierzu werden alle zum Reaktor führenden und vom Reaktor wegführenden Rohrleitungen mit einem Inertgas gespült. Die Spülgasmenge beläuft sich zwischen 1 und 500 Nm³/h bei Raumtemperatur.

Wird der Reaktor nach der Wiedermontage nicht sofort eingefahren, erfolgt eine Ruhespülung in montiertem Zustand. Dabei werden alle zum Reaktor führenden und vom Reaktor wegführenden Rohrleitungen und der Reaktor selbst mit Inertgas bei Spülgasmengen von 1 bis 500 Nm³/h gespült. Durch diese Maßnahme wird verhindert, dass sich während der Stillstandzeit Verschmutzungen ausbilden. Verschmutzungen können z. B. durch Korrosion entstehen, wenn restliche Verbindungen aus toten Räumen bzw. Rohrarmen ausgasen. Diese beeinflussen die Produktqualität negativ.

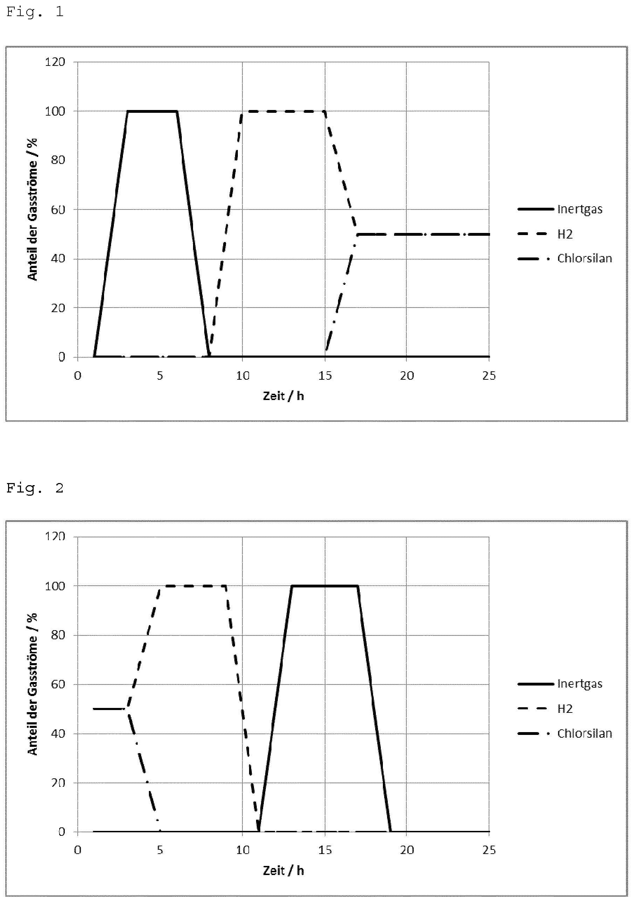

Die Erfindung wird nachfolgend anhand von **Fig. 1 und 2** erläutert.

### Kurzbeschreibung der Figuren

**Fig. 1** zeigt den zeitlichen Verlauf der Anteile der Gasströme Inertgas, H2 und Chlorsilan beim Einfahren.
**Fig. 2** zeigt den zeitlichen Verlauf der Anteile der Gasströme Inertgas, H2 und Chlorsilan beim Ausfahren.

**Fig. 1** zeigt, dass zunächst für einige Stunden ausschließlich mit einem Inertgas gespült wird. Dann wird ebenfalls für einige Stunden nur mit H2 gespült. Daran anschließend wird dem H2-Gasstrom Chlorsilan zugegeben, sodass sich die o. g. Konzentrationen ergeben.

**Fig. 2** zeigt, dass zunächst die Chlorsilanzufuhr gestoppt, die H2-Zufuhr erhöht und für einige Stunden ausschließlich mit H2 gespült wird. Daran anschließend wird ebenfalls für einige Stunden nur mit einem Inertgas gespült.

### Beispiele

Ein Reaktor mit 400 mm Innendurchmesser wird im Spülvorgang b für eine Zeit von 2 h gespült. Die Gasmengen betragen 600 Nm³/h, die Gaserhitzer für Reaktions- und Fluidisierungsgas sind auf eine Temperatur von 500 °C eingestellt.
Die Einfahrkurve bezüglich der Dotierstoffe Phosphor und Bor ist relativ schleppend, sodass erst nach einer Reaktorlaufzeit von 2 Wochen Material höchster Qualität mit einer Kontamination Phosphor < 800 ppta und Bor < 50 ppta produziert werden kann. Dieses Material ist zwar ausreichend für Solar-, jedoch nicht für Halbleiteranwendungen.

Ein Reaktor mit 400 mm Innendurchmesser wird im Spülvorgang b für eine Zeit von 30 h gespült. Die Gasmengen betragen 600 Nm³/h, die Gaserhitzer für Reaktions- und Fluidisierungsgas sind auf eine Temperatur von 100 °C eingestellt.
Die Einfahrkurve bezüglich der Dotierstoffe Phosphor und Bor ist schleppend, sodass erst nach einer Reaktorlaufzeit von 1,5 Wochen Material höchster Qualität mit einer Kontamination Phosphor < 800 ppta und Bor < 50 ppta produziert werden kann. Dieses Material ist zwar ausreichend für Solar-, jedoch nicht für Halbleiteranwendungen.

Ein Reaktor mit 400 mm Innendurchmesser wird im Spülvorgang b für eine Zeit von 30 h gespült. Die Gasmengen betragen 200 Nm³/h, die Gaserhitzer für Reaktions- und Fluidisierungsgas sind auf eine Temperatur von 500 °C eingestellt.
Die Einfahrkurve bezüglich der Dotierstoffe Phosphor und Bor ist schleppend, sodass erst nach einer Reaktorlaufzeit von 2 Wochen Material höchster Qualität mit einer Kontamination Phosphor < 800 ppta und Bor < 50 ppta produziert werden kann. Dieses Material ist zwar ausreichend für Solar-, jedoch nicht für Halbleiteranwendungen.

Ein Reaktor mit 400 mm Innendurchmesser wird im Spülvorgang b für eine Zeit von 30 h gespült. Die Gasmengen betragen 600 Nm³/h, die Gaserhitzer für Reaktions- und Fluidisierungsgas sind auf eine Temperatur von 500 °C eingestellt.
Bereits nach einer Laufzeit von 2 Tagen wird Material höchster Qualität für die Halbleiterindustrie erhalten mit Kontaminationen Phosphor < 200 ppta und Bor < 30 ppta.

## Patentansprüche

1. herfahren zum Betreiben eines Wirbelschichtreaktors in einem Prozess zur Herstellung von Trichlorsilan aus Silicium und HCl oder aus Silicium und H2/Tetrachlorsilan oder in einem Prozess zur Herstellung von Silicium aus Trichlorsilan, umfassend eine Spülung a des Reaktors und der Zugasleitungen bei Raumtemperatur mit einem Inertgas für 0,5 bis 10 Stunden mit einer Gasmenge von 10 bis 500 Nm³/h; eine Spülung b des Reaktors und der Zugasleitungen mit H2, wobei während des Spülens mit H2 auf eine Temperatur von 100-1000 °C aufgeheizt wird, wobei die Spülung für 2 bis 100 Stunden betrieben wird mit einer Gasmenge von 200 bis 1000 Nm³/h; eine Spülung c des Reaktors und der Zugasleitungen mit Trichlorsilan oder mit einem Gemisch enthaltend Trichlorsilan für 2 bis 50 Stunden mit einer Spülgasmenge, so dass eine Konzentration des Trichlorsilans oder des Trichlorsilangemisches bezogen auf eine gesamte durch eine Wirbelschicht geförderte Gasmenge 10 mol% bis 50 mol% beträgt und eine Konzentration des Trichlorsilans oder des Trichlorsilangemisches bezogen auf eine gesamte durch eine Reaktionsgasdüse geförderte Gasmenge 20 mol% bis 50 mol% beträgt.

2. Verfahren nach Anspruch 1, wobei nach Spülvorgängen in der Reihenfolge a-b-c polykristallines Silicium auf Keimpartikeln abgeschieden wird, wobei ein Reaktionsgas Trichlorsilan umfasst.

3. Verfahren nach Anspruch 2, wobei das Reaktionsgas Wasserstoff und Trichlorsilan umfasst.

4. Verfahren nach einem der Ansprüche 1 bis 3, wobei nach einer Abscheidung von polykristallines Silicium auf Keimpartikeln, bei der ein Reaktionsgas Trichlorsilan umfasst, eine Zufuhr von Reaktionsgas enthaltend Trichlorsilan beendet wird, anschließend eine Spülung b des Reaktors und der Zugasleitungen mit H2 erfolgt, wobei während des Spülens mit H2 auf eine Temperatur von 100-1000 °C aufgeheizt wird, wobei die Spülung für 1 bis 20 Stunden betrieben wird mit einer Gasmenge von 50 bis 800 Nm³/h und anschließend eine Spülung a des Reaktors und der Zugasleitungen bei Raumtemperatur mit einem Inertgas für 1 bis 20 Stunden mit einer Gasmenge von 10 bis 500 Nm³/h folgen und der Reaktor geöffnet und demontiert wird.

5. Verfahren nach Anspruch 4, wobei der Reaktor anschließend wieder montiert wird und Keimpartikel zugegeben werden.

6. Verfahren nach Anspruch 5, wobei zwischen Demontage und Widermontage des Reaktors eine weitere Spülung des Reaktors und der Zugasleitungen mit einem Inertgas erfolgt.

7. Verfahren nach einem der Ansprüche 1 bis 6, wobei ein oder mehrere der Spülungen a, b und c durch Druckwechselspülung verstärkt werden.

8. Verfahren nach einem der Ansprüche 1 bis 7, wobei es sich beim Inertgas um Stickstoff oder um ein Edelgas handelt.

## Claims

1. Process for operating a fluidized bed reactor in an operation for preparing trichlorosilane from silicon and HCl or from silicon and H2/tetrachlorosilane or in an operation for preparing silicon from trichlorosilane, comprising a purge a of the reactor and the input gas lines at room temperature with an inert gas at a gas rate of 10 to 500 m³ (STP)/h for 0.5 to 10 hours; a purge b of the reactor and the input gas lines with H2, wherein the purging with H2 is concurrent with heating to a temperature of 100-1000°C, wherein the purging is conducted for 2 to 100 hours with a gas rate of 200 to 1000 m³ (STP)/h; a purge c of the reactor and the input gas lines with trichlorosilane or with a mixture comprising trichlorosilane for 2 to 50 hours with such an amount of purge gas that a concentration of the trichlorosilane or the trichlorosilane mixture based on a total gas rate conveyed through a fluidized bed is 10 mol% to 50 mol% and a concentration of the trichlorosilane or the trichlorosilane mixture based on a total gas rate conveyed through a reaction gas nozzle is 20 mol% to 50 mol%.

2. Process according to Claim 1, wherein purge operations in the sequence a-b-c are followed by deposition of polycrystalline silicon on seed particles, with a reaction gas comprising trichlorosilane.

3. Process according to Claim 2, wherein the reaction gas comprises hydrogen and trichlorosilane.

4. Process according to any of Claims 1 to 3, wherein a deposition of polycrystalline silicon on seed particles in which a reaction gas comprises trichlorosilane is followed by termination of a supply of reaction gas comprising trichlorosilane, then a purge b of the reactor and the input gas lines with H2 is effected, wherein the purging with H2 is concurrent with heating to a temperature of 100-1000°C, wherein the purging is conducted for 1 to 20 hours with a gas rate of 50 to 800 m³ (STP)/h, and then a purge a of the reactor and the input gas lines is effected at room temperature with an inert gas at a gas rate of 10 to 500 m³ (STP)/h for 1 to 20 hours, and opening and disassembly of the reactor.

5. Process according to Claim 4, wherein the reactor is subsequently reassembled and seed particles are added.

6. Process according to Claim 5, wherein a further purge of the reactor and the input gas lines with an inert gas is effected between disassembly and reassembly of the reactor.

7. Process according to any of Claims 1 to 6, wherein one or more of the purges a, b and c is enhanced by pressure swing purging.

8. Process according to any of Claims 1 to 7, wherein the inert gas is nitrogen or a noble gas.

## Revendications

1. Procédé d'exploitation d'un réacteur à lit fluidisé dans un procédé de fabrication de trichlorosilane à partir de silicium et d'HCl ou de silicium et d'H₂/tétrachlorosilane ou dans un procédé de fabrication de silicium à partir de trichlorosilane, comprenant un rinçage a du réacteur et des conduites d'alimentation de gaz à température ambiante avec un gaz inerte pendant 0,5 à 10 heures avec une quantité de gaz de 10 à 500 Nm³/h ; un rinçage b du réacteur et des conduites d'alimentation de gaz avec H₂, un chauffage à une température de 100 à 1 000 °C ayant lieu pendant le rinçage avec H₂, le rinçage étant réalisé pendant 2 à 100 heures avec une quantité de gaz de 200 à 1 000 Nm³/h ; un rinçage c du réacteur et des conduites d'alimentation de gaz avec du trichlorosilane ou avec un mélange contenant du trichlorosilane pendant 2 à 50 heures avec une quantité de gaz de rinçage telle qu'une concentration du trichlorosilane ou du mélange de trichlorosilane par rapport à une quantité de gaz totale transportée par un lit fluidisé soit de 10 % en moles à 50 % en moles, et qu'une concentration du trichlorosilane ou du mélange de trichlorosilane par rapport à une quantité de gaz totale transportée au travers d'une buse de gaz de réaction soit de 20 % en moles à 50 % en moles.

2. Procédé selon la revendication 1, dans lequel, après les processus de rinçage dans l'ordre a-b-c, du silicium polycristallin est déposé sur des particules germes, un gaz de réaction comprenant du trichlorosilane.

3. Procédé selon la revendication 2, dans lequel le gaz de réaction comprend de l'hydrogène et du trichlorosilane.

4. Procédé selon l'une quelconque des revendications 1 à 3, dans lequel, après un dépôt de silicium polycristallin sur des particules germes, lors duquel un gaz de réaction comprend du trichlorosilane, un apport de gaz de réaction contenant du trichlorosilane est terminé, puis un rinçage b du réacteur et des conduites d'alimentation de gaz avec H₂ a lieu, un chauffage à une température de 100 à 1 000 °C ayant lieu pendant le rinçage avec H₂, le rinçage étant réalisé pendant 1 à 20 heures avec une quantité de gaz de 50 à 800 Nm³/h , et ensuite un rinçage a du réacteur et des conduites d'alimentation de gaz à température ambiante avec un gaz inerte pendant 1 à 20 heures avec une quantité de gaz de 10 à 500 Nm³/h s'ensuit, et le réacteur est ouvert et démonté.

5. Procédé selon la revendication 4, dans lequel le réacteur est ensuite de nouveau monté et des particules germes sont ajoutées.

6. Procédé selon la revendication 5, dans lequel un rinçage supplémentaire du réacteur et des conduites d'alimentation de gaz avec un gaz inerte a lieu entre le démontage et le nouveau montage du réacteur.

7. Procédé selon l'une quelconque des revendications 1 à 6, dans lequel un ou plusieurs des rinçages a, b et c sont renforcés par un rinçage modulé en pression.

8. Procédé selon l'une quelconque des revendications 1 à 7, dans lequel le gaz inerte consiste en de l'azote ou un gaz noble.
